# EUROPÄISCHE PATENTANMELDUNG

(11) **EP 2 799 669 A1**
(43) Veröffentlichungstag der Anmeldung: **05.11.2014**
(21) Anmeldenummer: 13165994.8
(22) Anmeldetag: 30.04.2013
(51) Int. Cl.: F01D 19/00, F02C 3/30, F02C 7/143, F02C 7/26, F04D 29/70

(54) **Verfahren zum Belasten einer Gasturbine**

(71) Anmelder: Siemens Aktiengesellschaft, 80333 München (DE)
(72) Erfinder: Heilos, Andreas, 45479 Mülheim an der Ruhr (DE)

(57) **Zusammenfassung**

Die Erfindung betrifft ein Verfahren zum Belasten einer Gasturbine. Um die Temperaturbelastung von Gasturbinen-Komponenten gering zu halten und/oder um einen möglichst schnellen Start der Gasturbine vom Leerlauf auf Teillast oder gar Nennlast zu ermöglichen, ist erfindungsgemäß vorgesehen, dass während des Belastungsvorgangs zumindest zeitweise in dem von einem Verdichter einer Gasturbine angesaugten Luftstrom und/oder in dem Strömungspfad des Verdichters eine Flüssigkeit eingebracht wird.

## Beschreibung

Die Erfindung betrifft ein Verfahren zum Belasten einer Gasturbine.

Gasturbinen und deren Betriebsweisen sind im Allgemeinen bekannt und detailliert in dem Buch "Stationäre Gasturbinen" von Christof Lechner und Jörg Seume (Herausgeber) aus dem Jahre 2003 beschrieben.

Nach der darin beschriebenen Anfahrweise beginnt der Start mit dem Anschleppen des Gasturbinenrotors aus dem Stillstand durch eine Antriebsvorrichtung. Mit Erreichen einer Zünddrehzahl werden die Brennstoffventile eines Zündbrenners, zumeist auch Pilotbrenner genannt, geöffnet. Gleichzeitig wird der Zündbrenner mittels einer Zündvorrichtung gezündet, wodurch eine kontinuierliche Verbrennung von stetig zugeführtem Brennstoff beginnt. Das Entfachen einer Hauptflamme erfolgt bei weiter erhöhter Drehzahl, welche nur mit Hilfe der Antriebsvorrichtung erreicht wird. Nach dem Erreichen einer Mindestdrehzahl ist die Gasturbine dann in der Lage sich selber weiter hoch zu schleppen, d.h. die Drehzahl des Rotors ohne die Hilfe der Antriebsvorrichtung weiter zu erhöhen. Bei Erreichen dieser Drehzahl wird die Anfahreinrichtung ausgekoppelt. Danach wird die in die Brennkammer eingespritzte Brennstoffmenge so lange weiter erhöht, bis der Rotor die Nenndrehzahl der Gasturbine erreicht. Anschließend wird der an den Gasturbinenrotor angekoppelte Generator mit dem Stromnetz synchronisiert. Zum Zeitpunkt der Synchronisierung erbringt die Gasturbine nur diejenige Last, die sie zur Aufrechterhaltung der Nenndrehzahl aufbringen muss. Die Gasturbine befindet sich mithin im Leerlauf, was im Englischen auch als "Full Speed No Load" bezeichnet wird. Erst nach dem Synchronisieren fängt die Phase der Belastung der Gasturbine an. Darunter ist zu verstehen, dass die Gasturbine eine zur elektrischen Stromerzeugung nutzbare Last an der Welle dem Generator übergibt. Das Belasten der Gasturbine erfolgt anfänglich durch weiteres Öffnen der Brennstoffventile, wobei währenddessen auch von einem Diffusionsbetrieb auf einen Vormischbetrieb der Hauptbrenner umgeschaltet werden kann. Mit weiterem Steigern des Brennstoffmassenstroms steigt zudem die Turbineneintrittstemperatur, während der Luftmassenstrom vorerst konstant bleibt. Mit Erreichen einer Grundlastaustrittstemperatur werden die am Verdichtereingang vorgesehenen Verdichtervorleitschaufeln geöffnet. Die anschließende Leistungssteigerung erfolgt sodann durch gleichzeitiges Erhöhen des Luft- und Brennstoffmassenstroms. Der Belastungsvorgang ist abgeschlossen, wenn die vom Generator zu erbringende elektrische Leistung, die vom Stromverteilungs-Netz vorgegeben wird, erreicht wird. Unter der Annahme, dass das Stromverteilungs-Netz die von der Gasturbine nominal maximal zu erbringende Last abfragt, läuft die Gasturbine dann bei Nennlast.

Im Zuge der Flexibilisierung der Strommärkte und aufgrund größerer Verfügbarkeit erneuerbarer Energien besteht heutzutage das Erfordernis, in immer kürzerer Zeit die vom Netz abgefragte Leistung selbst aus dem Stillstand der Gasturbine heraus zu erbringen.

Die Größe des Lastgradienten, mit der die Gasturbine belastet werden kann, ist jedoch durch Temperaturgradienten von Gasturbinenkomponenten begrenzt. Beispielsweise bei einem Kaltstart werden sowohl Gehäuse der Gasturbine als auch Rotor-Bauteile von der Raumtemperatur auf diejenigen Temperaturen aufgeheizt, die in den unmittelbar benachbarten Strömungskanälen der Gasturbine - also einem Verdichterströmungspfad, einem Verdichterausgangsdiffusor, einem die Brennkammer umgebenden Plenum und/oder einem Turbinenströmungspfad - lokal auftreten.

Diese thermische Beanspruchung wird auch als niederzyklische Ermüdung bezeichnet, was im englischen als "low cycle fatigue" bzw. unter dem Kürzel "LCF" bekannt ist. Weiter ist bekannt, dass in Abhängigkeit von dem gewählten Lastgradienten beim Belasten der Gasturbine der Lebensdauerverbrauch der Gasturbine individuell berechnet werden kann.

Aufgabe der Erfindung ist daher die Bereitstellung eines Verfahrens, mit dem sich die thermische Beanspruchung von Bauteilen beim Belasten der Gasturbine reduzieren lässt.

Eine weitere Aufgabe ist die Bereitstellung eines Verfahrens, mit dem sich eine Gasturbine unter Einhaltung von maximal zulässigen Temperaturgradienten von Gasturbinenkomponenten aus dem Stillstand schneller als bisher zur vom Stromverteilungs-Netz abgefragten Last anfahren lässt.

Die Aufgabe wird durch ein Verfahren gemäß den Merkmalen des Anspruchs 1 gelöst. Vorteilhafte Ausgestaltungen sind in den abhängigen Ansprüchen angegeben, deren Merkmale gemäß der Rückbeziehung der Ansprüche miteinander kombiniert werden können.

Erfindungsgemäß ist bei dem Verfahren zum Belasten einer Gasturbine vorgesehen, dass während des Belastungsvorgangs zumindest zeitweise in dem von einem Verdichter der Gasturbine angesaugten Luftstrom und/oder in den Strömungspfad des Verdichters eine Flüssigkeit eingebracht wird.

Der Erfindung liegt die Erkenntnis zu Grunde, dass nicht nur, wie bisher üblich, im Nennlastbetrieb, sondern auch schon während des Belastens der Gasturbine die Temperatur der Verdichterluft durch das Einbringen einer Flüssigkeit in den Luftstrom vor dem oder innerhalb des Verdichters abgesenkt werden kann.

Durch die Absenkung der Temperatur des Verdichtermassenstroms werden sowohl die Komponenten des Verdichters - also die Verdichterbeschaufelung, der Verdichterrotor und die Teile des ein- oder auch mehrschaligen Verdichtergehäuses - als auch die entsprechenden Komponenten der Brennkammer und der Turbineneinheit in gleicher Zeit auf eine geringere Temperatur erwärmt als bei derjenigen Betriebsweise, bei der keine zusätzliche Flüssigkeit eingebracht wird. Im Bereich des Heißgaspfades wirkt hierbei besonders, dass eine bestimmte Leistung infolge des erhöhten Massenstroms und der verminderten Verdichterarbeit (Verdichtung bei höherer Dichte) mit geringerer Turbineneintrittstemperatur erreicht wird. Der Temperaturgradient bei gegebenem Leistungsgradient ist somit geringer als bei der bisherigen, trockenen Fahrweise, wodurch die auftretenden thermischen Beanspruchungen vermindert werden. Dies verlängert die Lebensdauer dieser Komponenten. Insbesondere bei einem Kaltstart, aber auch bei einem Warmstart der Gasturbine treten die voran beschriebenen Effekte in vorteilhafter Weise auf.

Infolge der Absenkung der Eintrittstemperatur vor dem Verdichter als auch der verminderten Erwärmung während des Verdichtungsvorgangs - infolge von Verdampfung während der Verdichtung im Verdichter - werden sowohl der Verdichtermassenstrom angehoben als auch die spezifische Verdichterarbeit abgesenkt. Dies führt zu einer Erhöhung der Nutzleistung der Gasturbine.

Anstelle oder in Ergänzung einer Lebensdauerverlängerung der Komponenten ist gemäß einer vorteilhaften Weiterbildung der Erfindung vorgesehen, dass der Gradient der Belastung größer ist als derjenige maximale Gradient der Belastung, der ohne das Einbringen von Flüssigkeit zulässig ist. Hiermit wird während der Belastungsphase zwar teilweise oder vollständig die gleiche Lebensdauer verbraucht wie im Stand der Technik, jedoch wird der Zeitpunkt des Erreichens der vom Stromverteilungsnetz abgefragten Last früher erreicht als bei einer trockenen Belastungsphase. Dadurch kann die Gasturbine schneller vom Leerlauf auf Nennlast gefahren werden, was die Netzstabilität und Verfügbarkeit der Gasturbine erhöht.

Das Einbringen der Flüssigkeit in den vom Verdichter der Gasturbine angesaugten Luftstrom kann beispielsweise durch ein sogenanntes Nassverdichtungssystem, im Englischen auch als "wet compression system" bekannt, erfolgen. Hierbei kann grundsätzlich konstruktionsbedingt vorgesehen werden, dass zumindest ein Teil der Flüssigkeit erst innerhalb des Verdichters oder aber alternativ vollständig stromauf des Verdichters verdunstet. Ebenso möglich ist es, die Flüssigkeit ergänzend oder alternativ nicht nur vor dem Eingang des Verdichters der Gasturbine einzubringen, sondern auch stromab des Eingangs des Verdichters, in dessen Strömungspfad. Beide Methoden eignen sich zur Umsetzung der Erfindung.

Gemäß einer weiteren vorteilhaften Ausgestaltung der Erfindung erfolgt das Einbringen der Flüssigkeit während derjenigen Zeitspanne, bei dem die am Eingang des Verdichters angeordneten verstellbaren Einlassleitschaufeln sich in ihrer geschlossenen Position befinden. Dabei bedeutet "geschlossene Position" nicht, dass der Eintritt von Luft in dem Verdichter vollständig unmöglich ist. Vielmehr bedeutet diese "geschlossene Position", dass der Verdichter lediglich seine minimale Luftmenge ansaugen kann. Insbesondere für diesen Zeitbereich des Belastungsvorgangs, bei dem - mit anderen Worten - die verstellbaren Einlassleitschaufeln nicht kontinuierlich geöffnet werden, kann die insbesondere im Heißgaspfad auftretende Beanspruchung durch die temperaturgetriebene niederzyklische Ermüdung gering gehalten werden.

Insgesamt betrifft die Erfindung somit ein Verfahren zum Belasten einer Gasturbine. Um die Temperaturbelastung von Gasturbinen-Komponenten gering zu halten und/oder um einen möglichst schnellen Start der Gasturbine vom Leerlauf auf Teillast oder gar Nennlast zu ermöglichen, ist erfindungsgemäß vorgesehen, dass während des Belastungsvorgangs zumindest zeitweise in dem von einem Verdichter einer Gasturbine angesaugten Luftstrom und/oder in dem Strömungspfad des Verdichters eine Flüssigkeit eingebracht wird.

## Patentansprüche

1. Verfahren zum Belasten einer Gasturbine,
bei dem während des Belastungsvorgangs zumindest zeitweise in den von einem Verdichter der Gasturbine angesaugten Luftstrom und/oder in den Verdichter eine Flüssigkeit eingebracht wird.

2. Verfahren nach Anspruch 1,
welches bei einem Kaltstart oder einem Warmstart der Gasturbine durchgeführt wird.

3. Verfahren nach Anspruch 1 oder 2,
bei dem der Gradient der Belastung größer ist als derjenige Gradient der Belastung ohne das Einbringen von Flüssigkeit.

4. Verfahren nach Anspruch 1, 2 oder 3,
bei dem während des Einbringens der Flüssigkeit verstellbare Einlassleitschaufeln nicht verstellt werden.

5. Verfahren nach einem der vorangehenden Ansprüche,
bei dem die zugeführte Flüssigkeit konstruktionsbedingt zum Teil oder vollständig erst innerhalb des Verdichters verdunstet.

6. Verfahren nach einem der vorangehenden Ansprüche,
bei dem die zugeführte Flüssigkeit konstruktionsbedingt stromauf des Verdichters verdunstet.
